# FASCICULE DE BREVET EUROPEEN

(11) **EP 2 430 084 B1**
(45) Date de publication et mention de la délivrance du brevet: **27.12.2017**
(21) Numéro de dépôt: 10718192.7
(22) Date de dépôt: 10.05.2010
(51) Int. Cl.: C08J 9/00, C08J 9/02, C08G 18/28, C08G 18/60, C08G 101/00

(54) **PROCEDE DE PREPARATION DE MOUSSE POLYAMIDE ET MOUSSE SUSCEPTIBLE D'ETRE OBTENUE PAR CE PROCEDE**
VERFAHREN ZUR HERSTELLUNG VON POLYAMIDSCHAUMSTOFF UND NACH DEM VERFAHREN HERSTELLBARER SCHAUMSTOFF
METHOD FOR PREPARING POLYAMIDE FOAM AND FOAM CAPABLE OF BEING PRODUCED BY SAID METHOD

(30) Priorité: 15.05.2009 FR 0953224
(43) Date de publication de la demande: 21.03.2012
(73) Titulaire: Rhodia Opérations, 93306 Aubervilliers (FR)
(72) Inventeur: TROUILLET-FONTI, Lise, F-38200 Villette De Vienne (FR); ROCHE, Eric, F-38200 Luzinay (FR); JEOL, Stéphane, F-69006 Lyon (FR)
(74) Mandataire: Benvenuti, Federica
(86) Numéro de dépôt international: PCT/EP2010/056361
(87) Numéro de publication internationale: WO 2010/130686

(56) Documents cités:
- BE-A- 608 461
- FR-A1- 2 662 699
- FR-A1- 2 841 253
- US-A- 5 075 407
- US-A1- 2005 143 548

## Description

La présente invention concerne un procédé de préparation de mousse polyamide, ainsi qu'une mousse polyamide susceptible d'être obtenue selon ce procédé.

Les mousses synthétiques sont utilisées dans de nombreux domaines, tels que l'isolation thermique ou phonique, la sellerie etc.

On distingue essentiellement deux types de mousses : les mousses structurelles et les mousses non structurelles.

Les mousses structurelles sont des mousses rigides composées d'un coeur de faible densité et d'une peau dont la densité est proche de celle du polymère composant la matrice. Ces mousses peuvent être utilisées comme structures allégées dans le domaine de l'aéronautique ou de l'automobile par exemple.

Les mousses non structurelles peuvent être flexibles ou rigides. Les mousses rigides sont utilisées dans le domaine de l'isolation thermique (le gaz présent dans les cellules joue le rôle d'isolant). Les mousses flexibles sont utilisées dans le domaine de l'ameublement et de la sellerie, pour leurs propriétés de compressibilité et d'amortissement, dans le domaine de l'emballage en raison de leur faible poids, ainsi que dans le domaine de l'isolation phonique (les mousses présentant une porosité ouverte ont la particularité d'absorber certaines fréquences).

On connaît différentes méthodes pour obtenir des mousses de polymère thermoplastique, telles que des mousses de polystyrène, de PVC, de polyéthylène, de polypropylène, etc.

Il est connu d'injecter des gaz sous pression dans le polymère à l'état fondu.

Il est également connu d'incorporer des porophores -charges instables thermiquement- dans le polymère à l'état fondu, qui libèrent un gaz lors de leur décomposition. Le contrôle de cette méthode est parfois difficile et les cellules générées peuvent alors être de taille irrégulière.

Il est également possible d'introduire dans le polymère à l'état fondu des composés dissous dans le fondu, la mousse étant obtenue par volatilisation de ces composés.

Enfin, il est connu d'obtenir des mousses à l'aide d'une réaction chimique dégageant du gaz, comme du dioxyde de carbone. C'est le cas par exemple des mousses polyuréthane obtenues par réaction entre des isocyanates, des polyols et de l'eau conduisant à la formation de polyuréthane avec libération de dioxyde de carbone.

Des mousses de polyamide peuvent également être obtenues par voie chimique, en mettant en présence des isocyanates et des lactames ainsi que des bases pour activer la polymérisation anionique.

Le document D1 décrit ainsi des composites adhésifs structuraux en polyuréthane thermodurcissables expansibles et des compositions et procédés pour la production de ceux-ci consistant à disperser une composition de durcissement générant de l'eau dans une résine de base de polyuréthane pour former un composite adhésif non activé et à l'activer par chauffage pour former une composition adhésive.

Le document D2 décrit, quant à lui, une composition polyamide expansible et une mousse polyamide obtenue à partir de cette composition. Cette composition comprend un composé comprenant au moins une fonction isocyanate, un polyamide, et un composé comprenant au moins une fonction acide carboxylique. L'invention concerne également un procédé de préparation d'une mousse polyamide à partir de cette composition.

La présente invention propose une autre voie chimique de réalisation de mousses polyamides, à partir d'une composition comportant au moins un polyamide et au moins un polyuréthane. La préparation de la composition et de la mousse est simple, la mousse peut être obtenue *in situ* sans nécessité d'introduction d'agents extérieurs, directement à partir de la composition, et à l'aide d'outils classiques. Le procédé de préparation de la mousse permet notamment le contrôle de la réaction de moussage. Ce procédé est également flexible : en effet des mousses de nature et de propriétés variées peuvent être obtenues par ce procédé notamment par le choix adéquat de la nature et des caractéristiques du polyamide et du polyuréthane de la composition.

L'invention propose un procédé de préparation d'une mousse polyamide comportant au moins les étapes suivantes :
a) Chauffer une composition comprenant au moins les composés suivants :
   - A : un polyamide
   - B : un polyuréthane
   - éventuellement C : un composé comprenant au moins une fonction acide, de préférence carboxylique
      à une température supérieure ou égale à la température de fusion du polyamide A de la composition
b) Stabiliser la structure alvéolaire obtenue

L'invention propose également une mousse polyamide susceptible d'être obtenue par ce procédé.

Enfin, l'invention propose l'utilisation d'une composition telle que décrite ci-dessus pour préparer une mousse polyamide.

Le polyuréthane B de la composition comprend des fonctions uréthane ; il est susceptible de libérer des fonctions isocyanates sous l'effet de la température.

Par fonction acide, on entend toute fonction acide qui peut par réaction avec une fonction isocyanate permettre un dégagement gazeux généralement de dioxyde de carbone ; à titre d'exemple on peut citer les fonctions acide carboxylique, phosphorique, sulfonique etc. On préfère toutefois les fonctions acide carboxylique. Par fonction acide, on entend également les fonctions dérivées de la fonction acide, telle que la fonction anhydride d'acide, chlorure d'acide, ester etc. Ces fonctions dérivées conduisent soit directement à un dégagement gazeux généralement de dioxyde de carbone par réaction à chaud avec la fonction isocyanate, soit indirectement après réaction des fonctions dérivées avec un composé régénérant la fonction acide; à titre d'exemple de fonction dérivée pouvant conduire à un dégagement gazeux indirectement, on peut citer la fonction chlorure d'acide ou la fonction anhydride d'acide carboxylique pour lesquelles la fonction acide carboxylique peut être régénérée par réaction avec l'eau.

Le composé C de la composition comprend au moins une fonction acide. Le polyamide de l'invention A comprend généralement également des fonctions acide carboxylique ; ces fonctions peuvent être présentes aux extrémités terminales du polyamide, et/ou réparties le long de la chaîne polyamide.

Le polyuréthane B de l'invention peut également comprendre des fonctions acide, notamment acide carboxylique.

Ces fonctions acide carboxylique sont susceptibles de réagir avec les fonctions isocyanate du polyuréthane B selon la réaction suivante :

R₁N=C=O + R₂-COOH --> R₁-NH-CO-O-CO-R₂ --> R₁-NH-CO-R₂ + CO₂

De manière générale la composition expansible de l'invention comprend une certaine quantité de fonctions acide et de fonctions isocyanate, dont la réaction entraîne un dégagement gazeux notamment de dioxyde de carbone lors de la préparation de la mousse à partir de la composition expansible.

D'autres mécanismes peuvent également intervenir lors de la préparation de la mousse. Notamment l'eau apportée par le polyamide A de la composition peut réagir avec les fonctions isocyanate du polyuréthane B selon la réaction suivante :

R₁-N=C=O + H₂O → R₁-NH₂ + CO₂

Des fonctions acide peuvent être apportées par le polyamide A seul, par le polyuréthane B seul, par le composé C seul, par deux quelconques de ces composés A, B et C, ou par les trois composés A, B et C.

Le polyamide A de l'invention est un polyamide du type de ceux obtenus par polycondensation à partir de diacides carboxyliques et de diamines, ou du type de ceux obtenus par polycondensation de lactames et/ou aminoacides. Le polyamide de l'invention peut être un mélange de polyamides de différents types et/ou du même type, et/ou des copolymères obtenus à partir de différents monomères correspondant au même type et/ou à des types différents de polyamide.

Le polyamide A de l'invention présente avantageusement une masse moléculaire en nombre supérieure ou égale à 10000 g/mol, de préférence supérieure ou égale à 14000 g/mol, encore plus préférentiellement supérieure ou égale à 17000 g/mol.

A titre d'exemple de polyamide pouvant convenir pour l'invention, on peut citer le polyamide 6, le polyamide 6,6, le polyamide 11, le polyamide 12, les polyamides 4,6 ; 6,10 ; 6,12 ; 12,12, 6,36 ; les polyamides semi-aromatiques, les polyphtalamides obtenus à partir d'acide téréphtalique et/ou isophtalique tels que le polyamide commercialisé sous le nom commercial AMODEL, le copolyamide 6,6/6,T, leurs copolymères et alliages.

Selon un mode de réalisation préférentiel de l'invention, le polyamide est choisi parmi le polyamide 6, le polyamide 6,6, leurs mélanges et copolymères. Avantageusement le polyamide est le polyamide 6,6.

Selon une variante particulière de l'invention, le polyamide A de l'invention est un polyamide linéaire.

Selon une autre variante particulière de l'invention, le polyamide A de l'invention comprend des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2 743 077, FR 2 779 730, US 5 959 069, EP 0 632 703, EP 0 682 057 et EP 0 832 149.

Selon une autre variante particulière de l'invention, le polyamide A de l'invention est un copolyamide présentant une structure arbre statistique. Ces copolyamides de structure arbre statistique ainsi que leur procédé d'obtention sont notamment décrits dans le document WO 99/03909.

Selon un mode de réalisation particulier de l'invention, le polyamide A de l'invention peut être un polyamide de faible viscosité, tel que décrit dans le document WO2008/107314.

Le polyamide A de l'invention peut également être une composition comprenant un polyamide linéaire et comme additif un polyamide étoile, H et/ou arbre tels que décrits ci-dessus.

Le polyamide A de l'invention peut également être une composition comprenant comme additif un copolyamide hyperbranché du type de ceux décrits dans le document WO 00/68298.

Le polyamide A peut comporter éventuellement d'autres fonctions telles que des fonctions ester, et / ou urée, et / ou éther, etc..

Le polyuréthane B de l'invention est un polymère qui est généralement obtenu à partir d'un diisocyanate, d'un polyol et éventuellement d'un diol à chaîne courte.

Des exemples de diisocyanates pouvant être utilisés pour la préparation du polyuréthane sont l'isophorone diisocyanate, le 1,3- et 1,4-cyclohexane diisocyanate, le 1,2-éthylène diisocyanate, le 1,4-tétraméthylène diisocyanate, le 1,6-hexaméthylène diisocyanate, le 2,2,4 et 2,4,4-triméthyl-1,6-hexaméthylène diisocyanate, le 1,12-dodécane diisocyanate, le alpha,alpha'-diisocyanatodipropyl éther, le 1,3-cyclobutane diisocyanate, le 2,2- et 2,6-diisocynanato-1-méthylcyclohexane, le 2,5 et 3,5-bis(isocyanatométhyl)-8-méthyl-1,4-méthano-décahydronaphthalène, le 1,5-, 2,5-, 1,6- et 2,6-bis(isocyanatométhyl)-4,7-méthanohexahydroindane, le 1,5-, 2,5- et 2,6-bis (isocyanato)-4,7-méthanehexahydroindane, le 2,4'- et 4,4'-dicyclohexyl diisocyanate, le 2,4- et 2,6-hexahydrotolylène diisocyanate, le perhydro-2,4'- et 4,4'-diphénylméthane diisocyanate, le alpha,alpha'-diisocyanato-1,4-diéthylbenzène, le 1,3-et 1,4-phénylène diisocyanate, le 4,4'-diisocyanatobiphényl, le 4,4'-diisocyanato-3,3'-dichlorobiphényl, le 4,4'-diisocyanato-3,3'-diméthoxybiphényl, le 4,4'-diisocyanato-3,3'-diméthylbiphényl, le 4,4'-diisocyanato-3,3'-diphénylbiphényl, le 2,4'- et 4,4'-diisocyanato diphénylméthane, le naphthylène 1,5-diisocyanate, le 2,4- et 2,6-toluène diisocyanate, le N,N'-(4,4'-diméthyl-3,3'-diisocyanatodiphényl)uretdione, le m-xylylène diisocyanate, le dicyclohexylméthane diisocyanate, le tétraméthylxylylène diisocyanate, et les analogues et mélanges.

Le polyol utilisé pour la préparation du polyuréthane est généralement un polyester, une polycaprolactone ou un polyéther.

Les polyesters sont issus de la condensation d'un diacide carboxylique, généralement l'acide adipique, avec un diol. A titre d'exemple de polyester, on peut citer le poly(butanediol adipate), le poly(hexanediol adipate), le poly(éthanediol-butanediol adipate) etc.

Les polycaprolactones sont des polyesters issus de la polymérisation de l'ε-caprolactone et de diols.

A titre d'exemple de polyéther on peut citer le poly(éthylène glycol) (PEG), le poly(propylène glycol) (PPG), le poly(tetra méthylène glycol) (PTMG) etc.

Le diol à chaîne courte pouvant être utilisé pour la préparation du polyuréthane peut par exemple être l'hexanediol ou le butanediol, ou un diol aromatique.

Le polyuréthane est avantageusement un polyuréthane thermoplastique.

Le polyuréthane peut être aromatique ou aliphatique, en fonction de la nature aromatique ou aliphatique du diisocyanate utilisé pour le préparer. Avantageusement le polyuréthane de l'invention est aliphatique.

Le polyuréthane de l'invention peut être un mélange de plusieurs polyuréthanes différents.

Selon un mode de réalisation particulier de l'invention, le polyuréthane présente une masse moléculaire en nombre supérieure ou égale à 2000 g/mol. Avantageusement il présente une masse moléculaire en nombre supérieure ou égale à 5000 g/mol, de préférence supérieure ou égale à 10000 g/mol, encore plus préférentiellement supérieure ou égale à 13000 g/mol.

Le composé C comprenant au moins une fonction acide est de préférence un polyacide, c'est-à-dire un composé comprenant au moins deux fonctions acide. On peut utiliser des mélanges de différents composés C.

Le composé C peut aussi être un composé comprenant une fonction acide et une autre fonction, réactive avec la fonction carboxylique ou amine du polyamide, on peut ainsi citer à titre d'exemple de fonction réactive les fonctions amines primaires ou secondaires, alcools, sulfhydriles etc. Comme exemple de tel composé C, on peut citer l'acide citrique. Les fonctions réactives préférées sont les fonctions amines primaires ou secondaires.

Le composé C peut aussi être un composé comprenant une fonction acide et une autre fonction, non réactive avec la fonction carboxylique ou amine du polyamide, on peut ainsi citer à titre d'exemple de fonction non réactive les fonctions sulfonate, phosphonate etc. Comme exemple de tel composé C, on peut citer le sel de sodium de l'acide 3-sulfobenzoïque et le sel de potassium de l'acide 4-sulfobenzoïque.

Le composé C de l'invention est de préférence un diacide carboxylique. On peut citer à titre d'exemple de diacide carboxylique l'acide adipique, l'acide dodécanedioïque, l'acide téréphtalique etc..

La composition de l'invention comprend entre 0,5 et 20%, de préférence entre 1 et 10 % en poids de polyuréthane par rapport au poids de polyamide et de polyuréthane de la composition.

La composition de l'invention peut également comprendre, outre les composés A, B et éventuellement C, des agents porogènes qui permettront d'amplifier le phénomène de moussage lors de la préparation de la mousse à partir de la composition. De tels agents porogènes sont connus de l'homme du métier.

La composition expansible de l'invention peut également comprendre d'autres additifs utiles pour la préparation ultérieure de la mousse, tels que des surfactants, des nucléants comme le talc, des plastifiants etc. Ces additifs sont connus de l'homme du métier.

La composition peut également comprendre des charges de renfort telles que des fibres de verre, des matifiants tels que le dioxyde de titane ou le sulfure de zinc, des pigments, des colorants, des stabilisants chaleur ou lumière, des agents bioactifs, des agents antisalissure, des agents antistatiques, des ignifugeants, des charges de haute ou faible densité etc. Cette liste n'a aucun caractère exhaustif.

Toute méthode connue de l'homme du métier pour préparer une composition peut être utilisée pour préparer la composition de l'invention, comprenant un polyamide A, un polyuréthane B et éventuellement un composé C. On peut par exemple réaliser un mélange intime des poudres des différents composés. Il est également possible d'introduire le polyuréthane dans le polyamide à l'état fondu. Le mélange peut par exemple être réalisé dans un dispositif d'extrusion. Le polyamide peut également se présenter sous la forme de granulés, que l'on enrobe par du polyuréthane.

Lorsque la composition est préparée à l'aide d'un dispositif d'extrusion par exemple, celle-ci peut ensuite être mise sous forme de granulés. Ces granulés pourront ensuite être utilisés tels quels pour préparer la mousse à partir de la composition.

Selon un mode de réalisation particulier de l'invention, la composition est préparée par introduction du polyuréthane dans le polyamide fondu, la température du milieu étant choisie de façon à éviter tout dégagement de gaz significatif. Avantageusement la température T(°C) de préparation de la composition de l'invention est supérieure ou égale T_{f} - 30, de préférence supérieure ou égale à T_{f}- 20, encore plus préférentiellement supérieure ou égale T_{f} - 10, T_{f} étant la température de fusion (en °C) du polyamide A de la composition. La température T(°C) de préparation de la composition de l'invention est de préférence inférieure ou égale à 275°C. Dans ce cas la composition peut être préparée dans un dispositif d'extrusion, puis être mise sous forme de granulés par exemple. Les granulés obtenus sont des granulés expansibles, qui peuvent ensuite être introduits directement par exemple dans un dispositif de transformation et mise en forme, dans lequel la mousse polyamide de l'invention est préparée. Avantageusement la composition de l'invention avant l'étape a) est sous forme de granulés expansibles.

La température à atteindre lors de l'étape a) de chauffage du procédé de l'invention doit être suffisante pour qu'il y ait un dégagement gazeux généralement de dioxyde de carbone et la formation d'une structure alvéolaire. Le dégagement gazeux provient notamment de la réaction entre les fonctions isocyanate et les fonctions acide carboxylique du polyuréthane et du polyamide de la composition, et éventuellement du composé C. Il provient également de la réaction entre les fonctions isocyanate et l'eau contenue dans la composition. La température et la cinétique des réactions générant le dégagement gazeux sont dépendants de la nature des différents constituants de la mousse, c'est-à-dire du polyuréthane, du polyamide, et de la présence ou non de catalyseurs.

La température à atteindre lors de l'étape a) de chauffage est supérieure ou égale à la température de fusion du polyamide A de la composition. Avantageusement cette température T'(°C) est supérieure ou égale à T(°C)+10, de préférence supérieure ou égale à T(°C)+15, T(°C) étant la température de préparation de la composition de l'invention, décrite ci-dessus.

L'étape a) est généralement réalisée à l'état fondu. Un dispositif de transformation de matière plastique, tel qu'un dispositif d'extrusion, peut être utilisé lors de cette étape.

La durée de l'étape a) varie en fonction du dispositif utilisé. On peut mettre en oeuvre lors de cette étape un catalyseur, ou un mélange de catalyseurs.

Un catalyseur peut être utilisé pour accélérer la réaction de décarboxylation de l'anhydride carbamique et d'acide obtenu par réaction de la fonction acide avec la fonction isocyanate ; à titre d'exemple on peut citer les amines tertiaires telles que la diazabicyclooctane (DABCO), la diazabicycloundécène (DBU), la triéthylamine.

La préparation de la composition de l'invention et la préparation de la mousse à partir de cette composition peuvent s'effectuer simultanément. Elles peuvent être mises en oeuvre dans des dispositifs identiques, tels qu'un dispositif d'extrusion.

Des agents porogènes peuvent être introduits lors de l'étape a), ainsi que des surfactants, des nucléants comme le talc, des plastifiants etc.

D'autres composés peuvent également être introduits lors de l'étape a), tels que des charges de renfort comme les fibres de verre, des matifiants comme le dioxyde de titane ou le sulfure de zinc, des pigments, des colorants, des stabilisants chaleur ou lumière, des agents bioactifs, des agents antisalissure, des agents antistatiques, des ignifugeants etc. Cette liste n'a aucun caractère exhaustif.

L'étape b) de stabilisation de la structure alvéolaire est obtenue par voie physique par refroidissement à une température inférieure à la température de fusion ou à la température de transition vitreuse du polyamide, et/ou par voie chimique par réticulation du polyamide. Le refroidissement est généralement obtenu en réalisant une trempe (diminution rapide de la température). La réticulation du polyamide peut être réalisée par ajout d'agents réticulants connus de l'homme du métier. Ce sont en général des composés comprenant au moins deux fonctions réactives avec les fonctions acide et/ou amine du polyamide. Généralement ces composés comprennent au moins trois fonctions réactives. On peut citer à titre d'exemple d'agents réticulants les carbonylbislactames tels que le carbonylbiscaprolactame, le bisoxazine, le bisoxazoline. L'étape b) est avantageusement réalisée par voie physique et par refroidissement.

La structure mousse obtenue peut être mise en forme en mettant en oeuvre un dispositif de moulage, de moulage par injection, de thermoformage ou compression, par exemple de type SMC (« Sheet Molding Compound »), d'injection/soufflage, d'extrusion, d'extrusion/soufflage etc.

Le procédé de l'invention propose donc une méthode simple d'obtention de mousse polyamide. En effet la mousse polyamide peut être obtenue aisément selon des conditions classiques de transformation en voie fondue de polyamides aliphatiques tels que le polyamide 66, et à l'aide d'outils classiques. De plus, la mousse peut être obtenue *in situ* sans nécessité d'introduction de composés extérieurs, et directement à partir de la composition. Enfin ce procédé, notamment par la mise en oeuvre de matériaux polymériques (polyuréthane et polyamide), permet l'obtention d'une mousse présentant de bonnes propriétés mécaniques.

L'invention concerne également des mousses polyamide susceptibles d'être obtenues par le procédé décrit ci-dessus.

L'invention concerne enfin l'utilisation d'une composition comprenant au moins un polyamide et au moins un polyuréthane pour préparer une mousse polyamide. Tout ce qui a été décrit ci-dessus concernant la composition de l'invention s'applique à l'identique à cette composition. Avantageusement la composition de l'invention est sous forme de granulés expansibles.

D'autres détails ou avantages de l'invention apparaîtront plus clairement au vu des exemples donnés ci-dessous uniquement à titre indicatif.

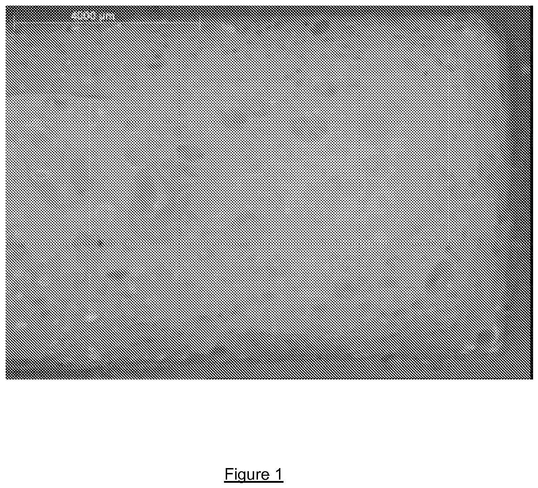

La figure 1 représente une vue en coupe de la mousse de l'invention, observée au microscope optique.

### EXEMPLES

Les teneurs en groupements terminaux acides et amines des polyamides sont dosées par potentiométrie. GTA signifie : groupements terminaux aminé ; GTC signifie : groupements terminaux acide carboxylique.

Les Indices de Viscosité (IV) des polyamides sont mesurés à partir d'une solution à 0,5% de polymère dissous dans de l'acide formique à 90%, selon la norme ISO EN 307

### Exemple 1 : Fabrication des granulés expansibles

Les composés utilisés sont les suivants :
- PA1: Polyamide 66 ayant un IV de 138 ml/g et contenant 1500 ppm d'eau. Teneurs en groupements terminaux : GTA = 42 meq/kg, GTC = 79 meq/kg.
- PA2 : Polyamide 66 ayant un IV de 163 ml/g et contenant 900 ppm d'eau. Teneurs en groupements terminaux : GTA = 35 meq/kg, GTC = 67 meq/kg.
- PU1 : Polyuréthane thermoplastique aliphatique base ε-caprolactone vendu sous la dénomination Krystalgran PN03-214 par la société Huntsman
- PU2 : Polyuréthane thermoplastique aliphatique base polyester vendu sous la dénomination Krystalgran PN3429-218 par la société Huntsman

Les compositions sont préparées par mélange en phase fondue, à l'aide d'une extrudeuse bi-vis co-rotative de type THERMO PRISM modèle TSE16TC, présentant un rapport longueur/diamètre égal à 25.

Les compositions préparées et les conditions d'extrusion sont détaillées dans le tableau 1. La proportion des composés est indiquée en pourcentage en poids dans la composition.

Les compositions extrudées sont refroidies dans l'eau à température ambiante et coupées sous forme de granulés.

**Tableau 1**

| Composé | Composition 1 | Composition 2 | Composition 3 | Composition 4 |
|---|---|---|---|---|
| PA1 | 90 | 90 | | |
| PA2 | | | 90 | 90 |
| PU1 | 10 | | 10 | |
| PU2 | | 10 | | 10 |
| Température du polymère fondu dans l'extrudeuse (°C) | 259(filière)-270-257-263 | 256(filière)-268-256-263 | 255(filière)-270-268-265 | 252(filière)-271-272-271 |
| Vitesse de rotation (tours/min) | 500 | 500 | 500 | 500 |
| Débit (kg/h) | 2,6 | 2,6 | 2,7 | 2,7 |
| Densité des granulés expansibles | 1,09 | 1,06 | 1,06 | - |

La densité du polyuréthane seul est de 1,13. La densité du polyamide 66 seul a été mesurée après extrusion sur la même extrudeuse, elle est de 1,11.

### Exemple 2 : Fabrication de matériau expansé à l'aide d'un dispositif d'extrusion

Le moussage des granulés expansibles de l'exemple 1 est réalisé en phase fondue, à l'aide d'une extrudeuse bi-vis co-rotative de type THERMO PRISM modèle TSE16TC, présentant un rapport longueur/diamètre égal à 25.

Les conditions d'extrusion et les densités obtenues sont résumées dans le tableau 2.

**Tableau 2**

| Composition | Composition 1 | Composition 3 |
|---|---|---|
| Taux d'eau avant moussage (ppm) | 1000 | 1100 |
| Température du polymère fondu dans l'extrudeuse (°C) | 246(filière)-271-295-290 | 245(filière)-271-293-288 |
| Débit (kg/h) | 2,0 | 1,6 |
| Vitesse de rotation (tours/min) | 500 | 250 |
| Densité | 0,7 | 0,7 |

Dans les deux cas, la distribution cellulaire est de type fermé.

### Exemple 3 : Fabrication d'articles expansés à l'aide d'un dispositif d'injection

Le moussage des granulés expansibles de l'exemple 1 est réalisé en phase fondue, à l'aide d'une presse à injecter BOY 12M 129-18 de BEWE PLAST avec un moule de type « plaque » de dimension (en mm) 80x10x4.

Les conditions d'injection et les densités obtenues sont résumées dans le tableau 3.

**Tableau 3**

| Composition | Composition 1 | Composition 3 |
|---|---|---|
| Taux d'eau avant moussage (ppm) | 1000 | 1100 |
| Profil de température (°C) | 300(buse)-295-295-275 | 300(buse)-295-295-275 |
| Pression d'injection maximale | 60 bars hydraulique | 60 bars hydraulique |
| Temps d'injection (s) | 2,3 | 2,6 |
| Température moule (°C) | 80 | 80 |
| Densité | 0,75 | 0,84 |

Dans les deux cas, la distribution cellulaire est de type fermée. On observe une structure coeur-peau avec un gradient de tailles de cellules allant de 50 µm environ sous la peau à 1mm environ à coeur (voir figure 1 qui correspond à la composition 1), typique d'une mousse structurelle.

## Revendications

1. Procédé de préparation d'une mousse polyamide comportant au moins les étapes suivantes :
a) Chauffer une composition comprenant au moins les composés suivants :
- A : un polyamide
- B : un polyuréthane susceptible de libérer des fonctions isocyanates sous l'effet de la température ,
- éventuellement C : un composé comprenant au moins une fonction acide, de préférence carboxylique
à une température supérieure ou égale à la température de fusion du polyamide A de la composition
ladite composition comprend entre 0,5 et 20% en poids de polyuréthane par rapport au poids de polyamide et de polyuréthane de la composition,
b) Stabiliser la structure alvéolaire obtenue par voie physique par refroidissement à une température inférieure à la température de fusion ou à la température de transition vitreuse du polyamide, et/ou par voie chimique par réticulation du polyamide.

2. Procédé selon la revendication 1, **caractérisé en ce que** le polyamide est un polymère de masse moléculaire en nombre supérieure ou égale à 10000 g/mol, de préférence supérieure ou égale à 14000 g/mol, encore plus préférentiellement supérieure ou égale à 17000 g/mol.

3. Procédé selon la revendication 1 ou 2, **caractérisé en ce que** le polyuréthane présente une masse moléculaire en nombre supérieure ou égale 2000 g/mol, avantageusement supérieure ou égale à à 5000 g/mol, de préférence supérieure ou égale à 10000 g/mol.

4. Procédé selon l'une des revendications précédentes, **caractérisé en ce que** le polyamide est un polyamide linéaire.

5. Procédé selon l'une des revendications précédentes, **caractérisé en ce que** le polyamide est choisi parmi le polyamide 6, le polyamide 6,6, le polyamide 6,10, leurs mélanges et copolymères.

6. Procédé selon l'une des revendications précédentes, **caractérisé en ce que** le polyamide est le polyamide 66.

7. Procédé selon l'une des revendications précédentes, **caractérisé en ce que** la composition comprend entre 1 et 10 % en poids de polyuréthane par rapport au poids de polyamide et de polyuréthane de la composition.

8. Procédé selon l'une des revendications précédentes, **caractérisé en ce que** la composition avant l'étape a) est sous forme de granulés expansibles.

9. Mousse susceptible d'être obtenue par le procédé selon l'une des revendications 1 à 8.

10. Article obtenu par mise en forme de la mousse obtenue par le procédé selon l'une des revendications 1 à 8, ou par mise en forme de la mousse selon la revendication 9.

## Patentansprüche

1. Verfahren zur Herstellung eines Polyamidschaumstoffs, welches mindestens die folgenden Schritte umfasst:
a) Erwärmen einer Zusammensetzung, die mindestens die folgenden Verbindungen umfasst:
- A: ein Polyamid
- B: ein Polyurethan, dessen funktionelle Isocyanatgruppen unter Einwirkung der Temperatur frei zugänglich werden können,
- möglicherweise C: eine Verbindung, die mindestens eine funktionelle Säuregruppe umfasst, vorzugsweise einer Carbonsäure,
auf eine Temperatur, die mindestens der Schmelztemperatur des Polyamids A der Zusammensetzung entspricht,
wobei die Zusammensetzung zwischen 0,5 und 20 Gewichts-% an Polyurethan umfasst, unter Bezugnahme auf das Gewicht des Polyamids und des Polyurethans der Zusammensetzung,
b) Stabilisieren der erhaltenen Hohlraumstruktur, auf physikalischem Wege, indem das Polyamid auf eine Temperatur abgekühlt wird, die niedriger als die Schmelztemperatur oder die Glasübergangstemperatur des Polyamids ist, und/oder auf chemischem Wege, indem das Polyamid vernetzt wird.

2. Verfahren nach Anspruch 1, **dadurch gekennzeichnet, dass** es sich bei dem Polyamid um ein Polymer mit einem Zahlenwert des Molekulargewicht von mindestens 10.000 g/mol, vorzugsweise von mindestens 14.000 g/mol, mit noch größerem Vorzug von mindestens 17.000 g/mol, handelt.

3. Verfahren nach Anspruch 1 oder 2, **dadurch gekennzeichnet, dass** das Polyurethan einen Zahlenwert des Molekulargewichts von mindestens 2.000 g/mol, vorteilhafterweise von mindestens 5.000 g/mol, vorzugsweise von mindestens 10.000 g/mol, aufweist.

4. Verfahren nach einem der vorhergehenden Ansprüche, **dadurch gekennzeichnet, dass** es sich bei dem Polyamid um ein geradkettiges Polyamid handelt.

5. Verfahren nach einem der vorhergehenden Ansprüche, **dadurch gekennzeichnet, dass** das Polyamid aus dem Polyamid 6, dem Polyamid 6,6, dem Polyamid 6,10, deren Mischung und deren Copolymeren ausgewählt ist.

6. Verfahren nach einem der vorhergehenden Ansprüche, **dadurch gekennzeichnet, dass** es sich bei dem Polyamid um das Polyamid 66 handelt.

7. Verfahren nach einem der vorhergehenden Ansprüche, **dadurch gekennzeichnet, dass** die Zusammensetzung 1 bis 10 Gewichts-% an Polyurethan umfasst, unter Bezugnahme auf das Gewicht des Polyamids und des Polyurethans der Zusammensetzung.

8. Verfahren nach einem der vorhergehenden Ansprüche, **dadurch gekennzeichnet, dass** die Zusammensetzung vor dem Schritt a) in Form von aufschäumbaren Granulatkörnern vorliegt.

9. Schaumstoff, der mittels des Verfahrens nach einem der Ansprüche 1 bis 8 erhalten werden kann.

10. Gegenstand, der durch Formgebung des Schaumstoffs, welcher mittels des Verfahren nach einem der Ansprüche 1 bis 8 hergestellt wurde, oder durch Formgebung des Schaumstoffs nach Anspruch 9 erhalten werden kann.

## Claims

1. Process for the preparation of a polyamide foam comprising at least the following stages:
a) Heating a composition comprising at least the following compounds:
- A: a polyamide
- B: a polyurethane capable of releasing isocyanate functional groups under the effect of the temperature,
- optionally C: a compound comprising at least one acid functional group, preferably a carboxylic acid functional group,
at a temperature greater than or equal to the melting point of the polyamide A of the composition,
said composition comprises between 0.5 and 20% by weight of polyurethane, with respect to the weight of polyamide and polyurethane of the composition,
b) Stabilizing the cellular structure obtained physically, by cooling to a temperature below the melting point or below the glass transition temperature of the polyamide, and/or chemically, by crosslinking the polyamide.

2. Process according to Claim 1, **characterized in that** the polyamide is a polymer with a number-average molecular weight of greater than or equal to 10 000 g/mol, preferably of greater than or equal to 14 000 g/mol and more preferably still of greater than or equal to 17 000 g/mol.

3. Process according to Claim 1 or 2, **characterized in that** the polyurethane exhibits a number-average molecular weight of greater than or equal to 2000 g/mol, advantageously of greater than or equal to 5000 g/mol and preferably of greater than or equal to 10 000 g/mol.

4. Process according to one of the preceding claims, **characterized in that** the polyamide is a linear polyamide.

5. Process according to one of the preceding claims, **characterized in that** the polyamide is chosen from polyamide 6, polyamide 6,6, polyamide 6,10 and their blends and copolymers.

6. Process according to one of the preceding claims, **characterized in that** the polyamide is polyamide 6,6.

7. Process according to one of the preceding claims, **characterized in that** the composition comprises between 1 and 10% by weight of polyurethane, with respect to the weight of polyamide and polyurethane of the composition.

8. Process according to one of the preceding claims, **characterized in that** the composition before stage a) is in the form of expandable granules.

9. Foam capable of being obtained by the process according to one of Claims 1 to 8.

10. Article obtained by shaping the foam obtained by the process according to one of Claims 1 to 8 or by shaping the foam according to Claim 9.
